# EUROPEAN PATENT SPECIFICATION

(11) **EP 3 678 071 B1**
(45) Date of publication and mention of the grant of the patent: **31.12.2025**
(21) Application number: 19194346.3
(22) Date of filing: 29.08.2019
(51) Int. Cl.: G06Q 10/04, G06Q 10/0832, G06Q 10/0833

(54) **SYSTEM AND METHOD FOR IMPROVING SAFETY IN WORKSPACE**
SYSTEM UND VERFAHREN ZUR VERBESSERUNG DER SICHERHEIT IN EINEM ARBEITSBEREICH
SYSTÈME ET PROCÉDÉ PERMETTANT D'AMÉLIORER LA SÉCURITÉ DANS L'ESPACE DE TRAVAIL

(30) Priority: 07.01.2019 IN 201921000713
(43) Date of publication of application: 08.07.2020
(73) Proprietor: Tata Consultancy Services Limited, Maharashtra (IN)
(72) Inventor: PANDA, SATANIK, 700160 Kolkata, West Bengal (IN); MISRA, PRATEEP, 700160 Kolkata, West Bengal (IN); PATEL, DEVANG, 400096 Mumbai, Maharashtra (IN); SHARMA, ANIL, 411057 Pune, Maharashtra (IN); JAIN, PUSHP, 411057 Pune, Maharashtra (IN)
(74) Representative: Goddar, Heinz J.

(56) References cited:
- US-A1- 2017 169 533
- US-A1- 2018 151 044
- US-A1- 2018 374 104

## Description

### CROSS-REFERENCE TO RELATED APPLICATIONS AND PRIORITY

The present application claims priority from Indian patent application no. 201921000713, filed on January 07, 2019.

### TECHNICAL FIELD

The disclosure herein generally relates to improving safety in workspace, and, more particularly, to system and method for safety improvement by enabling domain dependent context sensitive operating procedures of the workspace.

### BACKGROUND

Safety is paramount to any living environment including home, public places, workplace, hospital, operations, factory, and plant and so on. Such living environments may form a 'workspace' for conducting day-to-day activities and/or business; hence, hereinafter such living environment may be referred to as 'workspace'. In any safety incidence, fatality or injury can lead to disruption. In workspace context, the safety incidences can lead to significant downtime of the business due to regulatory compliances. It is therefore pertinent to ensure safety to thereby maintain trust and satisfaction of occupants. Proactive measures to prevent violation of safety SOPs (Standard Operating Procedures) can greatly improve the safety conditions in any workspace.

Conventional safety compliance systems offer manual entry of safety incidence. The inventors here have recognized several technical problems with such conventional systems, as explained below. Firstly, since such systems require manual entry of the details of safety incidence, these are human dependent and thus prone to errors. Hence, tracking of historical information associated with the incidence is challenging. Moreover, said details can be entered into the system only upon occurrence of the incidence, hence no predictive analysis can be performed using said systems. In addition, such systems lack proactive compliance to safety processes, and monitoring and alerting to avoid any safety incident / accident.
US 2018/0374104 A1 describes methods, systems, and computer-readable storage media for automatically providing a predictive model for an asset made up of multiple sub-assets with actions including receiving asset data including data values associated with the asset and at least one of sub-asset of the multiple assets, providing, by the one or more processors, a set of features based on the asset data, and executing an iterative feature selection and supervised learning process, including, for each iteration: selecting a sub-set of features from the set of features, performing supervised learning over the sub-set of features to provide a predictive model, and determining an accuracy of the predictive model, the iterations are performed until the accuracy of the predictive model exceeds a threshold accuracy.
US 2017/0169533 A1 describes a sensing device interconnected or interoperable with personal protective equipment that senses the relationship between a person and the protective equipment, which can communicate that relationship to a software application for compliance purposes.
US 2018/0151044 A1 describes methods, systems, and computer-readable storage media for monitoring dangerous goods based on networked devices including actions of registering a dangerous good with a monitoring system, the dangerous good being associated with a networked device, the networked device including one or more components that provide data associated with the dangerous good, determining at least one rule that is to be applied to handling of the dangerous good, receiving the data associated with the dangerous good, determining that a violation has occurred by comparing the data associated with the dangerous good to the at least one rule, and transmitting a notification to at least one application of a plurality of applications, the notification indicating that the violation has occurred.

### SUMMARY

Embodiments of the present disclosure present technological improvements as solutions to one or more of the above-mentioned technical problems recognized by the inventors in conventional systems. For example, in one embodiment, a method for improving safety in workspace is provided. The system includes at least one memory storing instructions; and one or more hardware processors coupled to say at least one memory. The one or more hardware processors are configured by said instructions to create a context model associated with the workspace by defining contextual domain and a plurality of safety violation rules for safety standard operating procedures (SOPs) of a plurality of digitally augmented assets corresponding to the plurality of physical entities present in the workspace. Further, the one or more hardware processors are configured by said instructions to monitor, in real-time, states of each of the plurality of digitally augmented assets by obtaining sensor-based data from a plurality of sensor devices deployed in a smart space environment implemented in the workspace. Furthermore, the one or more hardware processors are configured by said instructions to trigger SOP violations as events based on a comparison of the states of one or more of the plurality of digitally augmented assets with the plurality of safety violation rules using the context model

In another aspect, a method for improving safety in a workspace is provided. The processor-implemented method includes creating, via one or more hardware processors, a context model associated with the workspace by defining contextual domain and a plurality of safety violation rules for safety standard operating procedures (SOPs) of a plurality of digitally augmented assets corresponding to the plurality of physical entities present in the workspace. Further, the method includes monitoring, in real-time, states of each of the plurality of digitally augmented assets by obtaining sensor-based data from a plurality of sensor devices deployed in a smart space environment implemented in the workspace, via the one or more hardware processors. Additionally, the method includes triggering, via the one or more hardware processors, SOP violations as events based on a comparison of the states of one or more of the plurality of digitally augmented assets with the plurality of safety violation rules using the context model.

In yet another aspect, a non-transitory computer-readable medium having embodied thereon a computer program for executing a method for improving safety in a workspace is provided. The method includes creating a context model associated with the workspace by defining contextual domain and a plurality of safety violation rules for safety standard operating procedures (SOPs) of a plurality of digitally augmented assets corresponding to the plurality of physical entities present in the workspace. Further, the method includes monitoring, in real-time, states of each of the plurality of digitally augmented assets by obtaining sensor-based data from a plurality of sensor devices deployed in a smart space environment implemented in the workspace. Additionally, the method includes triggering, SOP violations as events based on a comparison of the states of one or more of the plurality of digitally augmented assets with the plurality of safety violation rules using the context model

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a networking environment implementing a system for safety improvement at a workspace, in accordance with an example embodiment.
FIG. 2A illustrates a block diagram of a system for safety improvement at a workspace, in accordance with an example embodiment.
FIG. 2B illustrates a relationship diagram illustrating relationship between different physical entities (or corresponding digitally augmented assets) of a workspace, in accordance with an example embodiment.
FIG. 3 illustrates an example flow diagram of a method for safety improvement at a workspace, in accordance with an example embodiment.
FIG. 4 illustrates a reference plant domain model (in manufacturing domain), in accordance with an example embodiment.
FIG. 5A illustrates a process flow for configuration of a context model of example plant domain model of FIG. 4, in accordance with an example embodiment.
FIG. 5B illustrates an example safety KPIs for the configuration of the context model of FIG. 5A, in accordance with an example embodiment.
FIG. 6 illustrates a process flow for monitoring of the states of digitally augmented assets of the plant model of FIG. 4, in accordance with an example embodiment.

### DETAILED DESCRIPTION OF EMBODIMENTS

The invention is defined by the appended claims. Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

Prevalent safety compliance systems offer manual entry of safety incidence details after the incidence/event and no means of tracking historical information is available. Moreover such conventional systems are devoid of means for proactively ensuring compliance to safety processes and monitoring and alerting to avoid any safety incidents and/or accidents.

Various embodiments disclosed herein provide method and system for improving safety in a workspace in an automatic manner. Particularly, the disclosed method and system are capable of enabling domain dependent context sensitive operating procedures of the workspace to automatically improve the safety. In an embodiment, the system defines business domain and standard operating procedure (SOP) context and corresponding rules involving states of physical entities, determines states of physical entities associated with the workspace using digital sensing technology (for instance, IoT platform), and automatically monitors and record compliance and/or violation of safety SOPs. Due to the aforementioned functionalities, the system enables tracking and improving behavior of actors involved to improve safety of the workspace. In an embodiment, the system is capable of accruing information from the safety incidents and/or accidents. In an embodiment, said collected information may be analyzed to predict future safety violations in the workspace.

Herein, the term 'SOP context' refers to the conditions of safety in a predefined business context. Accordingly, the system improves safety in the workspace by enabling domain dependent context sensitive operating procedures of said workspace. The condition of the definition of a thing and a state thereof are coupled to determine the condition of safety. The disclosed system and framework allows determination of an event type along with the domain context and correlation of said thing under a state of endpoint activation. Said determination is utilized to monitor safety conditions and raise safety events which are classified by the event type in different levels of safety.

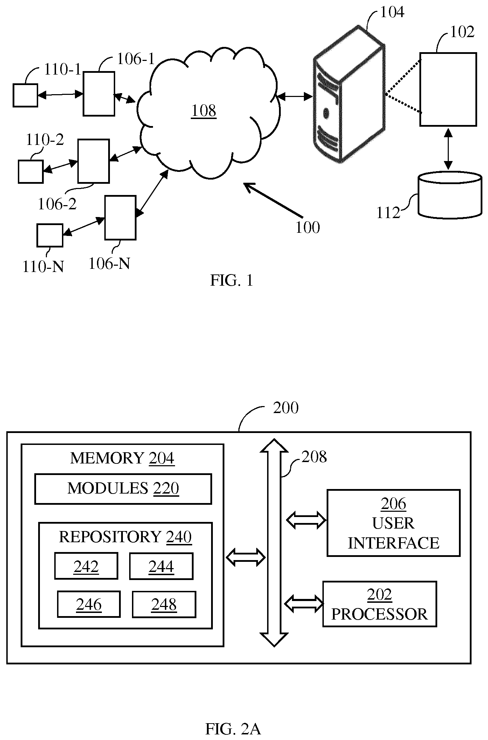

An important contribution of the disclosed embodiments is to effectively model a safety improvement system using context dependent SOPs of a workspace and monitoring the same in a smart space environment, thereby leading to improvement of safety in the workspace. Further, the disclosed embodiments enable analysis of the context dependent SOPs to predict future violation. A detailed description of the above described system for safety improvement is shown with respect to illustrations represented with reference to FIGS. 1 through 6.

The method(s) and system(s) for safety improvement in workspace are further described in conjunction with the following figures. It should be noted that the description and figures merely illustrate the principles of the present subject matter. It will thus be appreciated that those skilled in the art will be able to devise various arrangements that, although not explicitly described or shown herein, embody the principles of the present subject matter and are included within its spirit and scope. Furthermore, all examples recited herein are principally intended expressly to be only for pedagogical purposes to aid the reader in understanding the principles of the present subject matter and the concepts contributed by the inventor(s) to furthering the art, and are to be construed as being without limitation to such specifically recited examples and conditions. Moreover, all statements herein reciting principles, aspects, and embodiments of the present subject matter, as well as specific examples thereof, are intended to encompass equivalents thereof.

FIG. 1 illustrates a network environment 100 implementing a system 102 for safety improvement in workspace, according to an embodiment of the present subject matter. In an embodiment, the system 102 creates a context model associated with the workspace, for example a factory. The context model is created by modelling domain dependent context aware standard operating procedures for safety of the workspace. The model is capable of monitoring states of physical entities, such as machinery and personnel in the factory; and triggering SOP violations as events with severity classification thereof for enabling SOP rules compliance. Herein, each physical entity may maintain a 'state' thereof based on operation performed thereon and/or movement of said physical entity. The state of the physical entity or asset may be identified or monitored by tracking metadata properties or attributes associated with digitally augmented asset corresponding to the physical entity.

Additionally, the system is capable of analysis of SOP violation, root cause analysis and playback of SOP violations. The analysis of SOP violations such as root cause analysis may be utilized for predicting future violations. In an embodiment, the system 102 may be embodied in a computing device 104. Herein, it will be noted that for the purpose of this description, the aforementioned examples of workspace is considered to be a factory, and that of physical entities of the workspace are assumed to be machinery and personnel; however, the workspace and physical entities associated therewith are not limited to these examples. For example, in alternate embodiments, the workspace may include a plant site, a construction site, a commercial complex, an office premises, a residential complex, a hospital and so on. The workspace may further include a plurality of assets. Herein, it will be understood that an asset is a physical entity that has a lifecycle of its own. Also, in the present context, the definition of asset will encompass human beings also. Hence, the terms 'asset' and 'physical entity' will be interchangeably used in the foregoing description.

In the context of Industrial Internet or a smart space environment, asset lifecycles may be tracked by digitizing the asset via metadata properties or attributes thereof converted into digital form. Herein, said digital form of an entity/asset is referred to as 'digitally augmented asset corresponding to the entity'. Each of said attributes can be associated with a corresponding sensor for continuous monitoring. Industrial Internet applications may range from location based tracking of assets, remote management of assets, preventive or predictive maintenance, and so on. The digitally augmented assets facilitate in capturing different meta properties of assets such as static property, sensor based dynamic property, lookup based property, computed property, and so on.

Although the present disclosure is explained considering that the system 102 is implemented on a server, it may be understood that the system 102 may also be implemented in a variety of computing systems, such as a laptop computer, a desktop computer, a notebook, a workstation, a cloud-based computing environment and the like. It will be understood that the system 102 may be accessed by multiple contributors through one or more devices 106-1, 106-2... 106-N, collectively referred to as user devices 106 hereinafter, or applications residing on the devices 106. Examples of the devices 106 may include, but are not limited to, a portable computer, a personal digital assistant, a handheld device, a Smartphone, a Tablet Computer, a workstation and the like. The devices 106 are communicatively coupled to the system 102 through a network 108.

In an embodiment, the network 108 may be a wireless or a wired network, or a combination thereof. In an example, the network 108 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 108 may include a variety of network devices, including routers, bridges, servers, computing devices, storage devices. The network devices within the network 108 may interact with the system 102 through communication links.

As discussed above, the system 102 may be implemented in a computing device 104, such as a hand-held device, a laptop or other portable computer, a tablet computer, a mobile phone, a PDA, a smartphone, and a desktop computer. The system 102 may also be implemented in a workstation, a mainframe computer, a server, and a network server. In an embodiment, the system 102 may be coupled to a data repository, for example, a repository 112. The repository 112 may store data processed, received, and generated by the system 102. In an alternate embodiment, the system 102 may include the data repository 112.

In an embodiment, the network environment 100 may be an IoT based environment comprising various hardware and software elements collectively configured to perform real-time data analytics in the smart computing environment, according to an exemplary embodiment of the disclosure. The IoT based platform backend may include a cloud server, for example the server 104 connected to a database, for example, the database 112. The system 100 further includes various IoT based devices, for example the devices 106 implemented on different smart devices such as smart phone, a telematics device, and so on enabling real-time analytics of sensor data. The system further includes various heterogeneous sensor devices, for example sensor devices 110-1, 110-2, 110-N (hereinafter collectively referred to as sensor devices 110) and so on, placed in the vicinity of smart computing environment connected with various IoT based devices 106. Alternatively, said sensor devices 110 may be embodied in the IoT based devices 106. Thus, the sensor devices 110 along with the IoT based devices 106 may collectively form an intelligent smart environment according to this exemplary embodiment.

Further, as illustrated in FIG. 1, the network environment 100 supports various connectivity options such as BLUETOOTH^{®}, USB, ZigBee and other cellular services. In an exemplary embodiment, the system 102 interfaces with sensors 110 such as GPS, accelerometers, magnetic compass, audio sensors, camera sensors, and so on. Based on the data collected from various sensors, the system 102 with the help of various hardware and software platforms, collectively performs the task of scalable data analytics on the captured sensor data in any smart computing environment. The network environment enables connection of devices 106 such as Smartphone with the server 104, and accordingly with the database 112 using any communication link including Internet, WAN, MAN, and so on. In an exemplary embodiment, the system 102 is implemented to operate as a stand-alone device. In another embodiment, the system 102 may be implemented to work as a loosely coupled device to the smart computing environment. The components and functionalities of the system 102 are described further in detail with reference to FIG. 2A.

FIG. 2A illustrates a block diagram of a system 200 for improving safety of a workspace, in accordance with an example embodiment. The system 200 may be an example of the system 102 (FIG. 1). In an example embodiment, the system 200 may be embodied in, or is in direct communication with the system, for example the system 102 (FIG. 1).

In an embodiment, the system 200 creates a context model associated with the workspace. Herein, the context model is operative in a smart space environment, such as an Industrial internet of things (IIOT) enabled environment. It will be understood that the environments in which smart ubiquitous systems are deployed are referred to as "smart spaces". Smart ubiquitous computing systems are those that are developed and deployed in order to observe, monitor and track the state of various physical infrastructures, state physical objects, environment, human beings and their activities.

The system 200 provides infrastructure platforms in the smart-space environment characterized in facilitating quick and easy development, and deployment and management of sensor driven applications. In one embodiment, the present disclosure enables an Internet of Things (IoT) based platform, as described with reference to FIG. 1. Said IoT based platform may be a PaaS cloud computing platform that allows quick and easy development, deployment and administration of sensor driven applications. The IoT based platform interfaces with a heterogeneous set of sensors and devices (for example, devices 106 and sensors 110, FIG. 1) within the smart computing environment collecting sensor observations, storing the data in a database connected with the platform, performing scalable analytics on the data either within the vicinity of the smart computing environment on in a cloud, and so on. In this embodiment, the platform provide a suite of infrastructure services in the form of APIs and SDKs. IoT based platform provides a highly scalable platform for sensor integration, sensor data storage, analytics, rich query capabilities and visualization. The platform comprises a set of services related to sensor description, discovery, integration, sensor observation and measurement capture, storage and query in the form of APIs and libraries.

In general, smart spaces includes various categories of sensors, for example senor devices 110 (FIG. 1) adapted for sensing and observation of various parameters in the environment that may enable to perform analytics on them to alert the end-users about the consequence of changes in the state, if any. For example, sensors may be deployed to observe and track location of any physical object/entity, observe weather conditions to monitor natural calamities, observe traffic on the road to enable traffic shaping and vehicle surveillance systems, and so on. Such sensors may be embedded in physical entities and/or objects and things in the smart spaces. Many of said sensors may, directly or indirectly, be connected to the Internet. Many of the sensors may be deployed by organizations, companies or public sector entities such as city governments or utilities or government departments.

In a smart space environment associated with the workspace, the embodiments herein provision web-connected sensors and sensors available as part of smart mobile devices, for instance devices 106 (FIG. 1). Said sensors provisions for certain key requirements including sensor discovery, events monitoring, interfacing, query and tasking. Moreover, said sensors driven may be event driven and therefore includes capabilities such as event processing or stream processing. Additionally, said sensors may require support for various types of databases such as RDBMS, NOSQL and Object Stores, and so on, for scalable storage of different types of sensor observations. Also, the diversified domains may require specialized analytics and data visualization for deriving inferences and value addition. Said sensors perform on platforms that enable location based processing, spatial and spatio-temporal processing. Herein, it will be pertinent to note that said sensors may be suitable for multi-vendor generic sensor device management, data capture and observation processing.

Herein, the system 200 is a unified system that facilitates sensor driven distributed application development, testing, deployment, application life cycle management, analytics service, data storage service, sensor services and modeling and simulation for analytics. Also, the system 200 enables comprehensive hosting of services such as sensor service, analytics service, identity and access control service, data storage service that are required for prompt and speed-up sensor application development. Further, the system 200 facilitates real-time development and deployment of sensor-based applications using a rich suite of services that enables sensor data reusability, data normalizing and data privacy. Since the system embodies capabilities of sensor data processing, this leads to reduction in costs and effort required for development and deployment of sensor based applications. Further, the system is deployed with specific focus on particular devices/assets in the workspace, it is bound with security and privacy policies of said workspace.

In an embodiment, the context model creation is a key step for defining context of the entities of the workspace. The context model includes definitions of domain and rules for safety standard operating procedures for the entities of the workspace. Herein, the context model includes digitally augmented asset corresponding to each of the physical entities associated with the workspace. An important contribution of the various embodiments disclosed herein is that the system models digitally augmented asset corresponding to the human beings associated with the workspace in addition to other physical entities. The details of creating the context model, as well as monitoring of SOP rules compliance and further analysis for safety improvement of the workspace are described further in detail in the description below.

The system 200 includes or is otherwise in communication with one or more hardware processors such as a processor 202, at least one memory such as a memory 204, and an I/O interface 206. The processor 202, memory 204, and the I/O interface 206 may be coupled by a system bus such as a system bus 208 or a similar mechanism. The I/O interface 206 may include a variety of software and hardware interfaces, for example, a web interface, a graphical user interface, and the like The interfaces 206 may include a variety of software and hardware interfaces, for example, interfaces for peripheral device(s), such as a keyboard, a mouse, an external memory, and a printer. Further, the interfaces 206 may enable the system 102 to communicate with other devices, such as web servers and external databases. The interfaces 206 can facilitate multiple communications within a wide variety of networks and protocol types, including wired networks, for example, local area network (LAN), cable, and so on, and wireless networks, such as Wireless LAN (WLAN), cellular, or satellite. For the purpose, the interfaces 206 may include one or more ports for connecting a number of computing systems with one another or to another server computer. The I/O interface 206 may include one or more ports for connecting a number of devices to one another or to another server.

The hardware processor 202 may be implemented as one or more microprocessors, microcomputers, microcontrollers, digital signal processors, central processing units, state machines, logic circuitries, and/or any devices that manipulate signals based on operational instructions. Among other capabilities, the hardware processor 202 is configured to fetch and execute computer-readable instructions stored in the memory 204.

The memory 204 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 204 includes a plurality of modules 220 and a repository 240 for storing data processed, received, and generated by one or more of the modules 220. The modules 220 may include routines, programs, objects, components, data structures, and so on, which perform particular tasks or implement particular abstract data types.

The repository 240, amongst other things, includes a system database 242 and other data 244. The other data 244 may include data generated as a result of the execution of one or more modules in the modules 220. The repository 240 is further configured to maintain a training data 246 and recommendation data 248. The details of the training data 246 and the recommendation data 248 will be explained further in the description below.

According to the present subject matter, the system 200 facilitates in safety improvement of a workspace. In an embodiment, the system 200 creates a context model by defining contextual domain and a plurality of safety violation rules for the SOPs of the plurality of digitally augmented assets corresponding to the plurality of physical entities present in the workspace. As described previously, assets of a workspace may be digitized via metadata properties or attributes thereof converted into digital form. Said digital form of an asset is referred to as 'digitally augmented asset corresponding to the asset'. In an example embodiment, Java language based service has been written with a database to allow the definition of Digital Avatars. Each of said attributes can be attached to a sensor for continuous monitoring. Industrial Internet applications may range from location based tracking of assets, remote management of assets, preventive or predictive maintenance, and so on. The digitally augmented assets facilitate in capturing different meta property of assets such as static property, sensor based dynamic property, lookup based property, computed property, and so on.

The system models an asset by recording its attribute in digital form and capture those attribute value in time series data. Further, the system captures events that are generated due to changes happening on the assets in the system. Said events may contain sensor based data corresponding to the plurality of digitally augmented assets. Additionally, the sensors can be attached to any asset for capturing any asset property values in time series. A sensor detects events or changes in its environment, and then provides a corresponding output. In an embodiment, the sensors may be soft sensors such as algorithms or any program. Additionally or alternatively, the sensors may include transducer that transforms interesting, useful energy into electrical data.

There are multiple advantages of representing an asset as a digitally augmented asset. For instance, the digitally augmented asset allows modeling of logical asset parameters as part of the state of the physical entities. Further, it also allows integrated view of multiple subsystem information into a single digital asset. Digitally augmented assets facilitate to have cross section view of the same physical asset from multiple perspectives in digital forms. They may further allow abstract entities to be modelled as digital assets. In addition, the digitally augmented assets may be utilized for conducting experiments using simulation of state changes of the thereof.

In an embodiment, the context model is created by training the context model with a training data. In an embodiment, the system 200 may receive the training data 246 in order to train the system 200 for the safety improvement. The training data may include SOPs associated with the plurality of assets of the workspace, and a plurality of safety violation rules for the SOPs. Particularly, the training data may include samples of operation data and movement data associated with the plurality of assets of the workspace. For example, the training data may include rules associated with the assets. As previously mentioned, the training data may also include image upload for the asset type. Said images may contextualize the model of the asset with more realistic visualization.

In an embodiment, the system 200 may train the context model using the training data by one of supervised learning and unsupervised learning. In an embodiment, the training data may be stored in a repository. Alternatively, the training data may be stored in an external repository, and said external repository may be accessed by the system 200. A method for training the context model in accordance with an example embodiment is described below.

As already described, the context model associated with the workspace is created by defining contextual domain and a plurality of safety violation rules for safety standard operating procedures (SOPs) of a plurality of digitally augmented assets corresponding to the plurality of physical entities present in the workspace. In order to define the contextual domain, the system 200 defines an information model of a plurality of assets of the workspace and an operating process of each of said information model with respect to the domain of operation of this information model under given scope.

In an example embodiment, the information model of any entity or asset may include information such as assets types, corresponding asset properties, rules on asset types, image upload for the asset type, relationships among different asset types, and so on the digitally augmented assets corresponding to the plurality of assets of the workspace. For instance, a rule on assettype level may be i.e. On 'building' type a specific rule is to be executed when suppose 'Temperature' of each asset of building types exceeds 50 degree Celsius. The information model of any asset being activated in the given scope establishes a digitally augmented asset by using respective sensor connected to said asset.

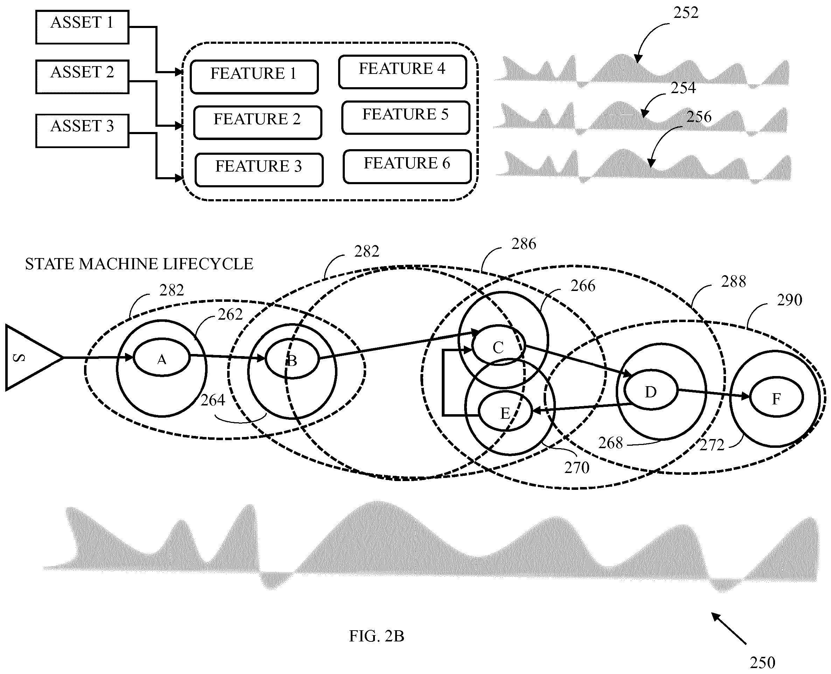

The information model may further include relationship between the plurality of digitally augmented assets of the workspace. For example, said relationship may be in form of a hierarchical structure having a hierarchy of assets in a parent-child fashion. There may be no limit of this chain. In an embodiment, cross asset type parent-child hierarchy may be possible in the information model. For instance, an asset of asset-type B can be a child of an asset of asset type C. In an embodiment, if an asset's property is of OBSERVATION type then digitally augmented asset corresponding to that asset may be associated with an external sensor. Each asset property may be mapped with a sensor's observed property. Said mapping may be done during asset creation or after asset creation in the information model. An example illustrating relationship between different physical entities (or corresponding digitally augmented assets) is described further with reference to FIG. 2B.

Referring to FIG. 2B, a relationship diagram 250 illustrating relationship between different physical entities (or corresponding digitally augmented assets) of a workspace is shown. The workspace is shown to include assets, for instance Asset1, Asset2, and Asset3. Each of the assets may have associated features. As already described, each asset or entity may be modelled into a corresponding digitally augmented asset by depicting all digital parameters of the asset into a logical model. Said parameters may be static, dynamic and/or computed in nature. The dynamic parameters may follow different input patterns when the data are updating those parameters over time. For example, the assets, namely asset2, asset2 and asset3 may have input distribution patterns, 252, 254, 256, respectively. Accordingly, a safety net may be defined as a common intersection point of those input patterns at any point of time.

A safety net can be defined with boundary values of this input streams based on their input data distribution. It is also possible to define a complex digitally augmented asset as a composition of multiple digitally augmented assets and each of those component digitally augmented assets also may have safety net around. Thus, it may create a hierarchy of safety net around the composite asset. For instance in FIG. 2B, the state machine lifecycle has assets A, B, C, D and E, and each of the asset includes a safety defined by boundaries (or conditions) 262, 264, 266, 268, 270 and 272 respectively. Now it may be possible to create safety nets around composite asset defined by assets A - E. The safety nets such as safety nets 282, 284, 286, 288, and 290 forms a hierarchy of safety nets around the composite digitally augmented asset defined by assets A - E.

In order to define a plurality of safety violation rules for SOPs of the plurality of digitally augmented assets, the system 200 determines change in the process transition points of states of the plurality of digitally augmented assets. Further the system identifies the process transitions to be associated with a set of rules satisfying a Deterministic Finite Automata (DFA) for all event-driven work flow. The system translates the process transitions into different kinds of safety violation rules bound to the each asset's individual information model or rules applies to the global context of scope for all the assets are part of under the use case to be performed.

In an embodiment, the system 200 is capable of identifying the state transition from a set of steps getting added into safety definition thereof if the transitions rule alerts are overruled by the system operator. For example, the system 200 may receive a response to the triggering of the SOP violation. In response, the system 200 may dynamically update one or more of the plurality of safety violation rules. For instance, as per an initial rule, the system 200 may direct unlocking of a door in a plant on triggering of a SOP violation. An operator in the workspace may have the authority to over-ride such action. In one instance, when said SOP violation is triggered, and an alert is generated, the operator may over-ride such action of unlocking the door. In such a scenario, the intelligent system 200 may dynamically update the safety violation rule to follow the overridden action, and modify the rule to keep the door locked on triggering of the SOP violation.

To ensure safety of the workspace, the system initialization till the system run must ensure integrity of each of the asset information model, rules associated with the model and global scope, lifecycle of said rules, events performed to create said rules, workflow to track changes to said rule condition or process definition, approval process for the rule modifications or process definition changes with secure change logs, data validation with automatic tool for smart rule validation which is under change, and secure log of all events triggering the changes in the process. With the aforementioned security consideration during system setup, a state machine is defined, which forms a baseline of SOPs involving the asset information models and a correlated ecosystem. Said baseline of the SOPs forms the training data and enables in training the context model.

Once the system 200 is operating, the event triggers in the smart space environment are monitored and logged to allow the state machine's smooth running, so that equilibrium is maintained in the whole ecosystem by these process definitions.

Herein event refers to anything that happens on an asset, especially one of importance. Events may be planned or unplanned. For example, the engine of a car may be started, this event may be recorded as Car Start. When the engine is stopped, said event may be recorded as Car Stop. Events may be categorized into various types which may be called as Event Types. Any event type to be recorded on an Asset need to be created before recording any event. Various examples of Event Type are Car Start, Sudden Braking, Over Speeding, and so on. Events for each Event Type can be recorded in two ways: Event Rules and Event Triggers (External). Event Rules may include rules that may be configured on any asset. Event rules may be mathematical expressions using the properties of any asset which may give a binary output. When a property of any asset is updated, the rule on that asset (if any) may be verified. In case, a rule is fulfilled, an event of that Event Type may be recorded with time. For instance, if an event is to be recorded at what times the temperature of asset A went above 30 degree centigrade. So an event type is created - "Temp above 30". Thereafter, an event rule may be created on asset A with formulae "Temp>30". Whenever the Temperature of asset A goes beyond 30 degree centigrade, an event may be recorded with event type "Temp above 30" and corresponding time.

Event Triggers (External) refers to events identified by external applications for a pre-defined event type that may be recorded on Asset Service by triggering API. For example, if any external system themselves detects event types based on sensor data, the same can be recorded as asset event. This can either be done by directly posting through API or via Action service. Events recorded on asset service for each asset may be a time series data and can be plotted graphically.

As previously discussed, since the workspace constitutes a smart space environment, it embodies multiple diverse and geographically diverse sensors embedded in the plurality of assets. In an embodiment, the system 200 monitors, in real-time, states of each of the plurality of digitally augmented assets by obtaining sensor-based data from the plurality of sensor devices 110 (FIG. 1) deployed in a smart space environment 100 implemented in the workspace. Herein, the sensor-based data includes at least an operation data and movement data of the plurality of sensor devices. The operation data may include data pertaining to operation of the assets associated with the respective sensor devices. For example, the operation data may include, but is not limited to, thermal readings, visual observations for example from the camera/image sensor, and so on. The movement data may include data pertaining to movement of the assets associated with the respective sensor devices. For instance, the movement data may include information regarding movement of personnel carrying assets embodying said sensor devices.

During operation of the system 200, the system 200 monitors change of state of the physical entities against defined safety violation rules for SOPs. Based on a comparison of the states of one or more of the plurality of digitally augmented assets with the plurality of safety violation rules using the context model, the system 200 triggers SOP violations as events. Additionally or optionally, the system 200 identifies and stores information of any compliance or violation, and reports said violation as event with classification of severity thereof. Said information of any compliance or violation along with a severity classification thereof is stored as the recommendation data in the memory 204 of the system 200.

In an embodiment, the system 200 monitors the states of each of the plurality of digitally augmented assets and provides recommendations of the SOP violations based on the recommendation embodied in the recommendation data. The system 200 may provide appropriate notification to concerned actors and right action may be performed to ensure safety. Herein an important contribution of the disclosed embodiments is that the system 200 provides the recommendations with domain specific process definition, thereby ensuring stability of the process safety of the context under the scope. Accordingly, the disclosed embodiments provide a robust system for safety improvement of the workspace.

In an embodiment, the system 200 is capable of automatically resolving SOP violations by performing root because analysis with previous history of violations stored in the context model. Accordingly, the system 200 is capable of predicting SOP violations based on analytics from data collected. In an embodiment, the history of SOP violations facilitates determining whether event is a part of normal SOP rules or an exception to the system. In an embodiment, the system 200 may apply deep learning techniques for predicting SOP violations.

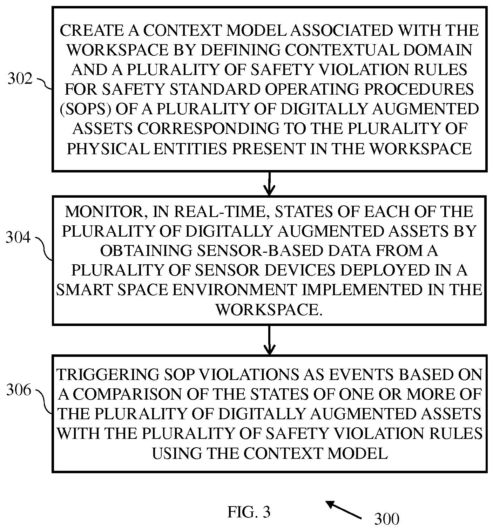

Referring now to FIG. 3, a flow diagram of a method 300 for improving safety of a workspace is described, in accordance with an example embodiment. The method 300 may be described in the general context of computer executable instructions. Generally, computer executable instructions can include routines, programs, objects, components, data structures, procedures, modules, functions, etc., that perform particular functions or implement particular abstract data types. The method 300 may also be practiced in a distributed computing environment where functions are performed by remote processing devices that are linked through a communication network. The order in which the method 300 is described is not intended to be construed as a limitation, and any number of the described method blocks can be combined in any order to implement the method 300, or an alternative method. Furthermore, the method 300 can be implemented in any suitable hardware, software, firmware, or combination thereof. In an embodiment, the method 300 depicted in the flow chart may be executed by a system, for example, the system 102 of FIG. 1. In an example embodiment, the system 102 may be embodied in an exemplary computer system.

Referring to FIG. 3, in the illustrated embodiment, the method 300 is initiated when at 302, a context model associated with the workspace is created. In an embodiment, the context model is created by defining contextual domain and a plurality of safety violation rules for SOPs of a plurality of digitally augmented assets corresponding to the plurality of physical entities present in the workspace. At 304, the method includes monitoring, in real-time, states of each of the plurality of digitally augmented assets by obtaining sensor-based data from a plurality of sensor devices deployed in a smart space environment implemented in the workspace. At 306, the method 300 includes triggering SOP violations as events based on a comparison of the states of one or more of the plurality of digitally augmented assets with the plurality of safety violation rules using the context model.

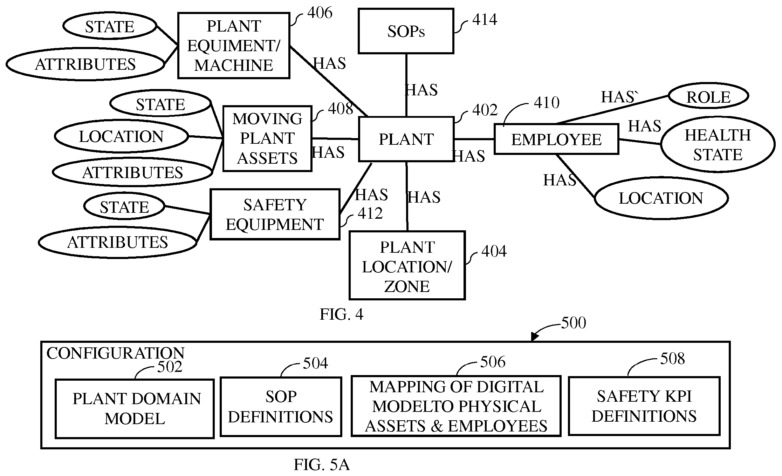

Referring to FIGS. 4-6, in an example scenario, the workspace is considered to be in a manufacturing domain. For description of the disclosed example embodiments, references will be made to FIGS. 1-3 along with FIGS. 4-6.

FIG. 4 illustrates a reference plant domain model (in manufacturing domain), in accordance with an example embodiment. The disclosed system, for example, the system 102 (FIG. 1)/200 (FIG. 2A) may allow said reference model to be configured and extended to fit the specific characteristics and needs of any manufacturing plant. Herein, physical assets/entities considered in the model include Plant 402, plant locations/zones/ floors 404, plant equipment/machine 406, moving plant asset (vehicle) 408, employee 410, safety equipment 412, and safety SOPs 414. Herein, it will be understood that in the disclosed example, the plant model is shown to include aforementioned components for brevity of description, however, in alternate embodiments, the plant may include fewer or more components than described here. The system 102/200 is configured to define SOPs, as described below.

The first step is configuration of a context model, as illustrated in a process flow 500 in FIG. 5A. The configuration of the context model may include creating a plant domain model 502, SOP definitions 504, mapping of the model to physical plant entities and employees 506; and defining safety KPIs. The steps of creation of the safety model are described below further in detail in context of the manufacturing plant.

The system 102/200 may create a context model associated with the workspace (i.e. the plant) by defining contextual domain and a plurality of safety violation rules for safety standard operating procedures (SOPs) of the digitally augmented assets corresponding to the physical entities present in the plant. Herein, the SOPs may have multiple SOP process steps, such that each SOP process step may have one or more rules to be checked when that SOP process step is executed. The safety violation rules may include one or more conditions that can be checked for compliance.

In an example scenario, below mentioned conditions (listed below) may be checked in a SOP rule. It will be understood, however, that the below mentioned conditions are enumerated for the purpose of description, however in alternate entities/plant model, the conditions and attributes may be fewer or more that those enumerated herein. In example scenario, said condition includes authorization for employee for entering in zone, authorization for employee operating a plant equipment, authorization for employee operating a moving plant asset like vehicle, authorization for moving asset to operate in location/zone, check the state of the safety equipment, check the state of the moving plant asset, check the state of the plant equipment, check role of the employee, check location of employee, check location of moving asset, check health state of employee - non-activity, sudden fall, check any attributes of employee, moving asset, plant equipment, safety equipment, condition to check severity of non-compliance, and so on.

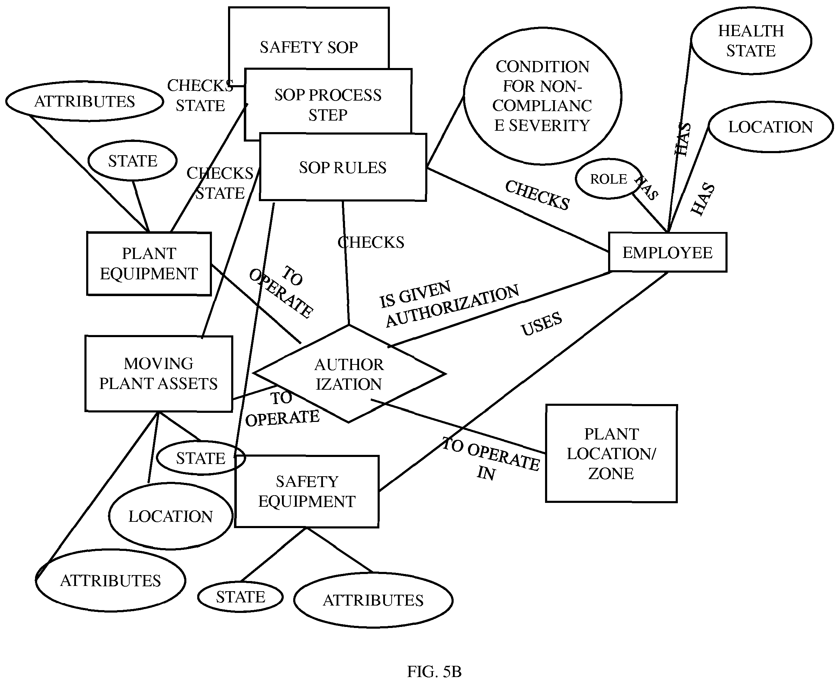

In an embodiment, the system may embody pre-defined KPIs configured therein, that may give analytics on safety incidents and compliance to SOPs. The system may allow configuration to define new KPIs as needed for the plant in consideration. Some of the example KPIs may include, incidents of risk while executing SOP step, incidents of compliance to SOP step, incident of non-compliance to SOP step, instances of authorized entry, total duration of stay in a zone, instances of unauthorized entry, total duration of unauthorized stay in a zone, near miss for collision between two moving assets (vehicles), near miss with SIF potential for collision between two moving assets (vehicles), near miss for collision between moving asset (vehicle) and employee, near miss with SIF potential for collision between moving asset (vehicle) and employee, instances of prolonged non-activity incidents - health related, number of fall incidents - health related. Examples of saftey KPIs are further illustrated in FIG. 5B.

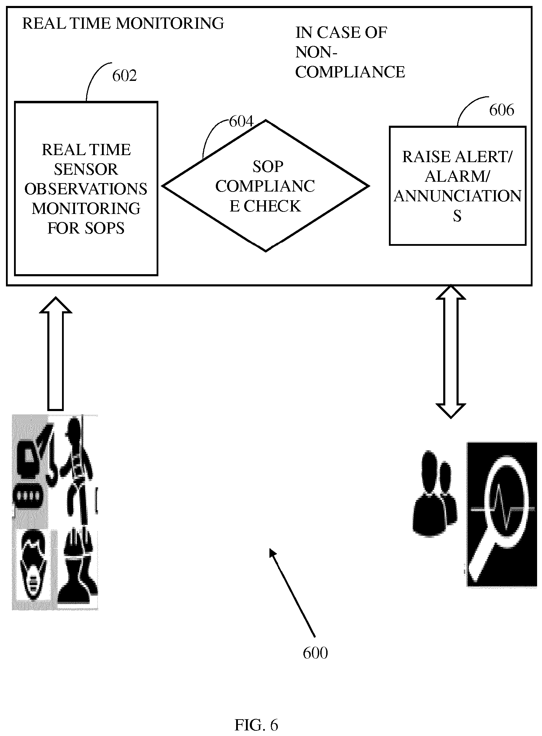

Once the context model is created, the system may monitor, in real-time, states of each of the plurality of digitally augmented assets. In an embodiment, the system monitors said states of the digitally augmented assets by obtaining sensor-based data from a plurality of sensor devices deployed in a smart space environment implemented in the workspace. The process flow 600 of said monitoring are described with reference to FIG. 6. As illustrated herein, the monitoring of the states of the digitally augmented assets may include real time sensor observations for monitoring of the SOPs 602, conducting SOP compliance check 604, and raising alerts/alarms annunciations for the concerned entities 606. The aforementioned steps of the process flow 600 are already explained with reference to FIGS. 1-3, and hence will not be repeated herewith for the brevity of description. In an embodiment, the system triggers SOP violations as events based on a comparison of the states of one or more of the digitally augmented assets with the safety violation rules using the context model.

The system is capable of predicting future safety violations based on analytics on data collected in the IoT platform. This will create models of plant operations and predict if a safety rule is violated. In an example, the system may include a UI that may enable a dashboard to show the safety rules violations. For instance, the dashboard may illustrate different modes in different colors including, green, amber and red colors. The Amber mode may indicate that a safety rule may get triggered based on what is happening in the plat at that moment. Herein, said models may take movement data and other operational data associated with the assets. In an embodiment, whenever a rule is changed or a new rule is created, the system may perform an analysis by replaying the past movement data to see which SOP rule would have triggered if the rule had been defined earlier. The system may include ability to perform audit traceability of SOP rules changes, rules approvals workflow and Rules syntax validation (automated tool for checking correctness of SOP rules).

In alternate domains for example, in Life science domain, other SOP based rules for safety may include definition of safety of an elderly person residing in a house alone and tracing his SOP behavior of daily routine is a collection of such rules.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

Various embodiments disclosed herein present methods and system for safety improvement in a workspace by enabling domain dependent context sensitive operating procedures of the workspace. The embodiments of present disclosure herein addresses unresolved problem of manually tracking and recording the safety incidences/violations at a workspace. The embodiments, thus provides system and method of configuring a context model embodying contextual domain and safety violation rules for safety SOPs of digitally augmented assets corresponding to the physical entities present in the workspace. Moreover, the embodiments herein further provide real-time monitoring of physical entities by enabling smart space environment. The smart space environment is enabled with sensor devices associated with digitally augmented assets corresponding to physical entities. Said sensors track and improve behavior of assets of the workspace, and accordingly improve safety. Additionally, the information collected pertaining to the SOP violations may be analyzed to predict future violations.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method for enabling a safe smart workspace environment, the method comprising:
creating (302) via one or more hardware processors (202), a context model associated with the workspace and operative in a smart space environment, by defining contextual domain and a plurality of safety violation rules for safety standard operating procedures (SOPs) of a plurality of digitally augmented assets corresponding to a plurality of physical entities/assets present in the workspace, said plurality of physical entities/assets including machinery and personnel present in the workspace, wherein the plurality of digitally augmented assets comprise the plurality of entities/assets in the smart space environment converted into a digital form via metadata properties or attributes, said attributes associated with a corresponding sensor device for continuous monitoring, the plurality of digitally augmented assets facilitating capture of different metadata properties of the plurality of entities/assets such as static property, sensor based dynamic property, lookup based property and computed property, thereby allowing modeling of asset parameters as part of state of the plurality of physical entities/assets and wherein the context model is trained by at least one of a supervised and an unsupervised learning models, using a training data including the SOPs associated with the plurality of assets present in the workspace and the plurality of safety violation rules for the SOPs;
monitoring (304) in real-time, states of each of the plurality of digitally augmented assets by obtaining sensor-based data from the sensor devices deployed in the smart space environment implemented in the workspace, via the one or more hardware processors;
wherein the sensor-based data comprises at least an operation data and movement data of the sensor devices and wherein the operation data comprises data pertaining to operation of the assets associated with the sensor devices and the movement data comprises data pertaining to movement of the assets associated with the sensor devices, wherein the sensor based devices perform on platforms that enable location based processing, spatial and spatio-temporal processing;
triggering (306), via the one or more hardware processors (202), SOPs violations as events, based on a comparison of states of each of the plurality of digitally augmented assets with the plurality of safety violation rules using the context model, wherein defining the plurality of safety violation rules comprises:
defining a safety net around the plurality of digitally augmented assets with boundary values of input streams of dynamic parameters updated over time based on their input data distribution, the safety net being a common intersection point of the input data distribution pattern at any point of time;
determining change in the process transition points of the states of each of the plurality of digitally augmented assets;
identifying the process transitions to be associated with a set of rules satisfying a Deterministic Finite automata (DFA) for event driven workflows; and
translating the process transitions into the plurality of safety violation rules bound to each asset's individual information model or the rules apply to global context of scope for all the assets part of a use case to be performed;
dynamically updating, via the one or more hardware processors, one or more of the plurality of safety violation rules based on a response received from a system operator in the workspace, when the SOPs violations are triggered;
automatically resolving, via the one or more hardware processors, the SOPs violations by performing root cause analysis with a history of SOPs violations stored in the context model; and
predicting, via the one or more hardware processors, future SOPs violations based on the root cause analysis performed on the current SOPs violations.

2. The processor implemented method of claim 1, wherein the plurality of safety violation rules being associated with process transition points of the states of the plurality of digitally augmented assets.

3. The processor implemented method of claim 1, further comprising providing recommendations of the SOP violations based on the monitoring of the states of each of the plurality of digitally augmented assets.

4. The processor implemented method of claim 1, further comprising training the context model with the plurality of safety violation rules using at least one of the supervised and unsupervised learning models.

5. A system (200) for enabling safe smart workspace environment, comprising:
a memory (204) storing instructions;
one or more communication interfaces (206); and
one or more hardware processors (202) coupled to the memory (204) via the one or more communication interfaces (206), wherein the one or more hardware processors (204) are configured by the instructions to:
create (302) a context model associated with the workspace and operative in a smart space environment, by defining contextual domain and a plurality of safety violation rules for safety standard operating procedures (SOPs) of a plurality of digitally augmented assets corresponding to a plurality of physical entities/assets present in the workspace, said plurality of physical entities/assets including machinery and personnel present in the workspace, wherein the plurality of digitally augmented assets comprise the plurality of entities/assets in the smart space environment converted into a digital form via metadata properties or attributes, said attributes associated with a corresponding sensor device for continuous monitoring, the plurality of digitally augmented assets facilitating capture of different metadata properties of the plurality of entities/assets such as static property, sensor based dynamic property, lookup based property and computed property, thereby allowing modeling of asset parameters as part of state of the plurality of physical entities/assets and wherein the context model is trained by at least one of a supervised and an unsupervised learning models, using a training data including the SOPs associated with the plurality of assets present in the workspace and the plurality of safety violation rules for the SOPs;
monitor (304), in real-time, states of each of the plurality of digitally augmented assets by obtaining sensor-based data from the sensor devices deployed in the smart space environment implemented in the workspace;
wherein the sensor-based data comprises at least an operation data and movement data of the sensor devices and wherein the operation data comprises data pertaining to operation of the assets associated with the sensor devices and the movement data comprises data pertaining to movement of the assets associated with the sensor devices, wherein the sensor based devices perform on platforms that enable location based processing, spatial and spatio-temporal processing;
trigger (306) SOP violations as events based on a comparison of states of each of the plurality of digitally augmented assets with the plurality of safety violation rules using the context model, wherein defining the plurality of safety violation rules comprises:
defining a safety net around the plurality of digitally augmented assets with boundary values of input streams of dynamic parameters updated over time based on their input data distribution, the safety net being a common intersection point of the input data distribution pattern at any point of time;
determining change in the process transition points of the states of each of the plurality of digitally augmented assets;
identifying the process transitions to be associated with a set of rules satisfying a Deterministic Finite automata (DFA) for event driven workflows; and translating the process transitions Into the plurality of safety violation rules bound to each asset's individual information model or the rules apply to global context of scope for all the assets part of a use case to be performed;
dynamically update one or more of the plurality of safety violation rules based on a response received from a system operator in the workspace_when the SOPs violations are triggered;
automatically resolve the SOPs violations by performing root cause analysis with a history of SOPs violations stored in the context model; and
predict future SOPs violations based on the root cause analysis performed on the current SOPs violations

6. The system of claim 5, wherein the plurality of safety violation rules being associated with process transition points of the states of the plurality of digitally augmented assets.

7. The system of claim 5, wherein the one or more hardware processors are configured by the instructions to provide recommendations of the SOP violations based on the monitoring of the states of each of the plurality of digitally augmented assets.

8. The system of claim 5, wherein the one or more hardware processors are configured by the instructions to train the context model with the plurality of safety violation rules using at least one of the supervised and unsupervised learning models.

9. One or more non-transitory machine readable information storage mediums comprising one or more instructions which when executed by one or more hardware processors (202) cause:
creating (302), via one or more hardware processors (202), a context model associated with the workspace and operative In a smart space environment, by defining contextual domain and a plurality of safety violation rules for safety standard operating procedures (SOPs) of a plurality of digitally augmented assets corresponding to a plurality of physical entities/assets present in the workspace, said plurality of physical entities/assets including machinery and personnel present in the workspace, wherein the plurality of digitally augmented assets comprise the plurality of entities/assets in the smart space environment converted into a digital form via metadata properties or attributes, said attributes associated with a corresponding sensor device for continuous monitoring, the plurality of digitally augmented assets facilitating capture of different metadata properties of the plurality of entities/assets such as static property, sensor based dynamic property, lookup based property and computed property, thereby allowing modeling of asset parameters as part of state of the plurality of physical entities/assets and wherein the context model is trained by at least one of a supervised and an unsupervised learning models, using a training data including the SOPs associated with the plurality of assets present in the workspace and the plurality of safety violation rules for the SOPs;
monitoring (304), in real-time, states of each of the plurality of digitally augmented assets by obtaining sensor-based data from the sensor devices deployed in the smart space environment implemented in the workspace, via the one or more hardware processors;
wherein the sensor-based data comprises at least an operation data and movement data of the sensor devices and wherein the operation data comprises data pertaining to operation of the assets associated with the sensor devices and the movement data comprises data pertaining to movement of the assets associated with the sensor devices, wherein the sensor based devices perform on platforms that enable location based processing, spatial and spatio-temporal processing;
triggering (306), via the one or more hardware processors (202), SOPs violations as events, based on a comparison of states of each of the plurality of digitally augmented assets with the plurality of safety violation rules using the context model, wherein defining the plurality of safety violation rules comprises:
defining a safety net around the plurality of digitally augmented assets with boundary values of input streams of dynamic parameters updated over time based on their input data distribution, the safety net being a common intersection point of the input data distribution pattern at any point of time;
determining change in the process transition points of the states of each of the plurality of digitally augmented assets;
identifying the process transitions to be associated with a set of rules satisfying a Deterministic Finite automata (DFA) for event driven workflows; and
translating the process transitions into the plurality of safety violation rules bound to each asset's individual information model or the rules apply to global context of scope for all the assets part of a use case to be performed;
dynamically updating, via the one or more hardware processors, one or more of the plurality of safety violation rules based on a response received from a system operator in the workspace when the SOPs violations are triggered;
automatically resolving, via the one or more hardware processors, the SOPs violations by performing root cause analysis with a history of SOPs violations stored in the context model; and
predicting, via the one or more hardware processors, future SOPs violations based on the root cause analysis performed on the current SOPs violations.

## Patentansprüche

1. Prozessorimplementiertes Verfahren zum Ermöglichen einer sicheren intelligenten Arbeitsbereichsumgebung, wobei das Verfahren Folgendes umfasst:
Erstellen (302), über einen oder mehrere Hardwareprozessoren (202), eines Kontextmodells, das dem Arbeitsbereich zugeordnet ist und in einer intelligenten Arbeitsbereichsumgebung betrieben werden kann, durch Definieren einer Kontextdomäne und einer Mehrzahl von Sicherheitsverletzungsregeln für Sicherheitsstandardbetriebsverfahren (Standard Operating Procedures, SOPs) einer Mehrzahl von digital erweiterten Anlagen, die einer Mehrzahl von physischen Einheiten/Anlagen entsprechen, die in dem Arbeitsbereich vorhanden sind, wobei die Mehrzahl von physischen Einheiten/Anlagen Maschinen und Personal umfasst, die in dem Arbeitsbereich vorhanden sind, wobei die Mehrzahl von digital erweiterten Anlagen die Mehrzahl von Einheiten/Anlagen in der intelligenten Arbeitsbereichsumgebung umfasst, die über Metadateneigenschaften oder -attribute in eine digitale Form umgewandelt werden, wobei die Attribute einer entsprechenden Sensorvorrichtung zur kontinuierlichen Überwachung zugeordnet sind, wobei die Mehrzahl von digital erweiterten Anlagen die Erfassung verschiedener Metadateneigenschaften der Mehrzahl von Einheiten/Anlagen wie etwa einer statischen Eigenschaft, einer sensorbasierten dynamischen Eigenschaft, einer nachschlagbasierten Eigenschaft und einer berechneten Eigenschaft erleichtert, wodurch das Modellieren von Anlagenparametern als Teil des Zustands der Mehrzahl von physischen Einheiten/Anlagen ermöglicht wird, und wobei das Kontextmodell durch mindestens eines von einem überwachten und einem unüberwachten Lernmodell trainiert wird, wobei Trainingsdaten verwendet werden, die die SOPs umfassen, die der Mehrzahl von Anlagen zugeordnet sind, die in dem Arbeitsbereich vorhanden sind, und die Mehrzahl von Sicherheitsverletzungsregeln für die SOPs;
Überwachen (304), in Echtzeit, von Zuständen jeder der Mehrzahl von digital erweiterten Anlagen durch Erhalten von sensorbasierten Daten von den Sensorvorrichtungen, die in der intelligenten Arbeitsbereichsumgebung eingesetzt werden, die in dem Arbeitsbereich implementiert ist, über den einen oder die mehreren Hardwareprozessoren;
wobei die sensorbasierten Daten mindestens Betriebsdaten und Bewegungsdaten der Sensorvorrichtungen umfassen und wobei die Betriebsdaten Daten umfassen, die sich auf den Betrieb der Anlagen beziehen, die den Sensorvorrichtungen zugeordnet sind, und die Bewegungsdaten Daten umfassen, die sich auf die Bewegung der Anlagen beziehen, die den Sensorvorrichtungen zugeordnet sind, wobei die sensorbasierten Vorrichtungen auf Plattformen arbeiten, die eine ortsbasierte Verarbeitung, eine räumliche und eine räumlich-zeitliche Verarbeitung ermöglichen;
Auslösen (306), über den einen oder die mehreren Hardwareprozessoren (202), von SOPs-Verletzungen als Ereignisse, basierend auf einem Vergleich von Zuständen jeder der Mehrzahl von digital erweiterten Anlagen mit der Mehrzahl von Sicherheitsverletzungsregeln unter Verwendung des Kontextmodells, wobei das Definieren der Mehrzahl von Sicherheitsverletzungsregeln Folgendes umfasst:
Definieren eines Sicherheitsnetzes um die Mehrzahl von digital erweiterten Anlagen mit Grenzwerten von Eingabeströmen von dynamischen Parametern, die im Laufe der Zeit basierend auf ihrer Eingabedatenverteilung aktualisiert werden, wobei das Sicherheitsnetz ein gemeinsamer Schnittpunkt des Eingabedatenverteilungsmusters zu einem beliebigen Zeitpunkt ist;
Bestimmen einer Änderung der Prozessübergangspunkte der Zustände jeder der Mehrzahl von digital erweiterten Anlagen;
Identifizieren der Prozessübergänge, die einem Satz von Regeln zuzuordnen sind, die einen deterministischen endlichen Automaten (Deterministic Finite Automata, DFA) für ereignisgesteuerte Arbeitsabläufe erfüllen; und
Übersetzen der Prozessübergänge in die Mehrzahl von Sicherheitsverletzungsregeln, die an das individuelle Informationsmodell jeder Anlage gebunden sind, oder die Regeln gelten für den globalen Kontextumfang für alle Anlagen, die Teil eines auszuführenden Anwendungsfalls sind;
dynamisches Aktualisieren, über den einen oder die mehreren Hardwareprozessoren, einer oder mehrerer der Mehrzahl von Sicherheitsverletzungsregeln basierend auf einer Antwort, die von einem Systembetreiber im Arbeitsbereich empfangen wird, wenn die SOPs-Verletzungen ausgelöst werden;
automatisches Auflösen, über den einen oder die mehreren Hardwareprozessoren, der SOPs-Verletzungen durch Ausführen einer Ursachenanalyse mit einer Historie von SOPs-Verletzungen, die im Kontextmodell gespeichert sind; und
Vorhersagen, über den einen oder die mehreren Hardwareprozessoren, zukünftiger SOPs-Verletzungen basierend auf der Ursachenanalyse, die an den aktuellen SOPs-Verletzungen ausgeführt wird.

2. Prozessorimplementiertes Verfahren nach Anspruch 1, wobei die Mehrzahl von Sicherheitsverletzungsregeln Prozessübergangspunkten der Zustände der Mehrzahl von digital erweiterten Anlagen zugeordnet ist.

3. Prozessorimplementiertes Verfahren nach Anspruch 1, das ferner Folgendes umfasst: Empfehlen der SOP-Verletzungen basierend auf der Überwachung der Zustände jeder der Mehrzahl von digital erweiterten Anlagen.

4. Prozessorimplementiertes Verfahren nach Anspruch 1, das ferner das Trainieren des Kontextmodells mit der Mehrzahl von Sicherheitsverletzungsregeln unter Verwendung des überwachten und/oder des nicht überwachten Lernmodells umfasst.

5. System (200) zum Ermöglichen einer sicheren intelligenten Arbeitsbereichsumgebung, das Folgendes umfasst:
einen Speicher (204), der Anweisungen speichert;
eine oder mehrere Kommunikationsschnittstellen (206); und
einen oder mehrere Hardwareprozessoren (202), die über die eine oder die mehreren Kommunikationsschnittstellen (206) mit dem Speicher (204) gekoppelt sind, wobei der eine oder die mehreren Hardwareprozessoren (204) durch die Anweisungen konfiguriert sind zum:
Erstellen (302) eines Kontextmodells, das dem Arbeitsbereich zugeordnet ist und in einer intelligenten Arbeitsbereichsumgebung betrieben werden kann, durch Definieren einer Kontextdomäne und einer Mehrzahl von Sicherheitsverletzungsregeln für Sicherheitsstandardbetriebsverfahren (Standard Operating Procedures, SOPs) einer Mehrzahl von digital erweiterten Anlagen, die einer Mehrzahl von physischen Einheiten/Anlagen entsprechen, die in dem Arbeitsbereich vorhanden sind, wobei die Mehrzahl von physischen Einheiten/Anlagen Maschinen und Personal umfasst, die in dem Arbeitsbereich vorhanden sind, wobei die Mehrzahl von digital erweiterten Anlagen die Mehrzahl von Einheiten/Anlagen in der intelligenten Arbeitsbereichsumgebung umfasst, die über Metadateneigenschaften oder -attribute in eine digitale Form umgewandelt werden, wobei die Attribute einer entsprechenden Sensorvorrichtung zur kontinuierlichen Überwachung zugeordnet sind, wobei die Mehrzahl von digital erweiterten Anlagen die Erfassung verschiedener Metadateneigenschaften der Mehrzahl von Einheiten/Anlagen wie etwa einer statischen Eigenschaft, einer sensorbasierten dynamischen Eigenschaft, einer nachschlagbasierten Eigenschaft und einer berechneten Eigenschaft erleichtert, wodurch das Modellieren von Anlagenparametern als Teil des Zustands der Mehrzahl von physischen Einheiten/Anlagen ermöglicht wird, und wobei das Kontextmodell durch mindestens eines von einem überwachten und einem unüberwachten Lernmodell trainiert wird, wobei Trainingsdaten verwendet werden, die die SOPs umfassen, die der Mehrzahl von Anlagen zugeordnet sind, die in dem Arbeitsbereich vorhanden sind, und die Mehrzahl von Sicherheitsverletzungsregeln für die SOPs;
Überwachen (304), in Echtzeit, von Zuständen jeder der Mehrzahl von digital erweiterten Anlagen durch Erhalten von sensorbasierten Daten von den Sensorvorrichtungen, die in der intelligenten Arbeitsbereichsumgebung eingesetzt werden, die in dem Arbeitsbereich implementiert ist;
wobei die sensorbasierten Daten mindestens Betriebsdaten und Bewegungsdaten der Sensorvorrichtungen umfassen und wobei die Betriebsdaten Daten umfassen, die sich auf den Betrieb der Anlagen beziehen, die den Sensorvorrichtungen zugeordnet sind, und die Bewegungsdaten Daten umfassen, die sich auf die Bewegung der Anlagen beziehen, die den Sensorvorrichtungen zugeordnet sind, wobei die sensorbasierten Vorrichtungen auf Plattformen arbeiten, die eine ortsbasierte Verarbeitung, eine räumliche und eine räumlich-zeitliche Verarbeitung ermöglichen;
Auslösen (306) von SOP-Verletzungen als Ereignisse basierend auf einem Vergleich von Zuständen jeder der Mehrzahl von digital erweiterten Anlagen mit der Mehrzahl von Sicherheitsverletzungsregeln unter Verwendung des Kontextmodells, wobei das Definieren der Mehrzahl von Sicherheitsverletzungsregeln Folgendes umfasst:
Definieren eines Sicherheitsnetzes um die Mehrzahl von digital erweiterten Anlagen mit Grenzwerten von Eingabeströmen von dynamischen Parametern, die im Laufe der Zeit basierend auf ihrer Eingabedatenverteilung aktualisiert werden, wobei das Sicherheitsnetz ein gemeinsamer Schnittpunkt des Eingabedatenverteilungsmusters zu einem beliebigen Zeitpunkt ist;
Bestimmen einer Änderung der Prozessübergangspunkte der Zustände jeder der Mehrzahl von digital erweiterten Anlagen;
Identifizieren der Prozessübergänge, die einem Satz von Regeln zuzuordnen sind, die einen deterministischen endlichen Automaten (Determinicstic Finite Automata, DFA) für ereignisgesteuerte Arbeitsabläufe erfüllen; und der Prozessübergänge in die Mehrzahl von Sicherheitsverletzungsregeln, die an das individuelle Informationsmodell jeder Anlage gebunden sind, oder die Regeln gelten für den globalen Kontextumfang für alle Anlagen, die Teil eines auszuführenden Anwendungsfalls sind;
dynamisches Aktualisieren einer oder mehrerer der Mehrzahl von Sicherheitsverletzungsregeln basierend auf einer Antwort, die von einem Systembetreiber im Arbeitsbereich empfangen wird, wenn die SOPs-Verletzungen ausgelöst werden;
automatisches Auflösen der SOPs-Verletzungen durch Ausführen einer Ursachenanalyse mit einer Historie von SOPs-Verletzungen, die im Kontextmodell gespeichert sind; und
Vorhersagen zukünftiger SOPs-Verletzungen basierend auf der Ursachenanalyse, die an den aktuellen SOPs-Verletzungen ausgeführt wird.

6. System nach Anspruch 5, wobei die Mehrzahl von Sicherheitsverletzungsregeln Prozessübergangspunkten der Zustände der Mehrzahl von digital erweiterten Anlagen zugeordnet ist.

7. System nach Anspruch 5, wobei der eine oder die mehreren Hardwareprozessoren durch die Anweisungen konfiguriert sind, um Empfehlungen der SOP-Verletzungen basierend auf der Überwachung der Zustände jeder der Mehrzahl von digital erweiterten Anlagen bereitzustellen.

8. System nach Anspruch 5, wobei der eine oder die mehreren Hardwareprozessoren durch die Anweisungen konfiguriert sind, um das Kontextmodell mit der Mehrzahl von Sicherheitsverletzungsregeln unter Verwendung des überwachten und/oder des nicht überwachten Lernmodells zu trainieren.

9. Ein oder mehrere nichtflüchtige maschinenlesbare Informationsspeichermedien, die eine oder mehrere Anweisungen umfassen, die bei Ausführung durch einen oder mehrere Hardwareprozessoren (202) Folgendes bewirken:
Erstellen (302), über einen oder mehrere Hardwareprozessoren (202), eines Kontextmodells, das dem Arbeitsbereich zugeordnet ist und in einer intelligenten Arbeitsbereichsumgebung betrieben werden kann, durch Definieren einer Kontextdomäne und einer Mehrzahl von Sicherheitsverletzungsregeln für Sicherheitsstandardbetriebsverfahren (Standard Operating Procedures, SOPs) einer Mehrzahl von digital erweiterten Anlagen, die einer Mehrzahl von physischen Einheiten/Anlagen entsprechen, die in dem Arbeitsbereich vorhanden sind, wobei die Mehrzahl von physischen Einheiten/Anlagen Maschinen und Personal umfasst, die in dem Arbeitsbereich vorhanden sind, wobei die Mehrzahl von digital erweiterten Anlagen die Mehrzahl von Einheiten/Anlagen in der intelligenten Arbeitsbereichsumgebung umfasst, die über Metadateneigenschaften oder -attribute in eine digitale Form umgewandelt werden, wobei die Attribute einer entsprechenden Sensorvorrichtung zur kontinuierlichen Überwachung zugeordnet sind, wobei die Mehrzahl von digital erweiterten Anlagen die Erfassung verschiedener Metadateneigenschaften der Mehrzahl von Einheiten/Anlagen wie etwa einer statischen Eigenschaft, einer sensorbasierten dynamischen Eigenschaft, einer nachschlagbasierten Eigenschaft und einer berechneten Eigenschaft erleichtert, wodurch das Modellieren von Anlagenparametern als Teil des Zustands der Mehrzahl von physischen Einheiten/Anlagen ermöglicht wird, und wobei das Kontextmodell durch mindestens eines von einem überwachten und einem unüberwachten Lernmodell trainiert wird, wobei Trainingsdaten verwendet werden, die die SOPs umfassen, die der Mehrzahl von Anlagen zugeordnet sind, die in dem Arbeitsbereich vorhanden sind, und die Mehrzahl von Sicherheitsverletzungsregeln für die SOPs;
Überwachen (304), in Echtzeit, von Zuständen jeder der Mehrzahl von digital erweiterten Anlagen durch Erhalten von sensorbasierten Daten von den Sensorvorrichtungen, die in der intelligenten Arbeitsbereichsumgebung eingesetzt werden, die in dem Arbeitsbereich implementiert ist, über den einen oder die mehreren Hardwareprozessoren;
wobei die sensorbasierten Daten mindestens Betriebsdaten und Bewegungsdaten der Sensorvorrichtungen umfassen und wobei die Betriebsdaten Daten umfassen, die sich auf den Betrieb der Anlagen beziehen, die den Sensorvorrichtungen zugeordnet sind, und die Bewegungsdaten Daten umfassen, die sich auf die Bewegung der Anlagen beziehen, die den Sensorvorrichtungen zugeordnet sind, wobei die sensorbasierten Vorrichtungen auf Plattformen arbeiten, die eine ortsbasierte Verarbeitung, eine räumliche und eine räumlich-zeitliche Verarbeitung ermöglichen;
Auslösen (306), über den einen oder die mehreren Hardwareprozessoren (202), von SOPs-Verletzungen als Ereignisse, basierend auf einem Vergleich von Zuständen jeder der Mehrzahl von digital erweiterten Anlagen mit der Mehrzahl von Sicherheitsverletzungsregeln unter Verwendung des Kontextmodells, wobei das Definieren der Mehrzahl von Sicherheitsverletzungsregeln Folgendes umfasst:
Definieren eines Sicherheitsnetzes um die Mehrzahl von digital erweiterten Anlagen mit Grenzwerten von Eingabeströmen von dynamischen Parametern, die im Laufe der Zeit basierend auf ihrer Eingabedatenverteilung aktualisiert werden, wobei das Sicherheitsnetz ein gemeinsamer Schnittpunkt des Eingabedatenverteilungsmusters zu einem beliebigen Zeitpunkt ist;
Bestimmen einer Änderung der Prozessübergangspunkte der Zustände jeder der Mehrzahl von digital erweiterten Anlagen;
Identifizieren der Prozessübergänge, die einem Satz von Regeln zuzuordnen sind, die einen deterministischen endlichen Automaten (Deterministic Finite Automata, DFA) für ereignisgesteuerte Arbeitsabläufe erfüllen; und
Übersetzen der Prozessübergänge in die Mehrzahl von Sicherheitsverletzungsregeln, die an das individuelle Informationsmodell jeder Anlage gebunden sind, oder die Regeln gelten für den globalen Kontextumfang für alle Anlagen, die Teil eines auszuführenden Anwendungsfalls sind;
dynamisches Aktualisieren, über den einen oder die mehreren Hardwareprozessoren, einer oder mehrerer der Mehrzahl von Sicherheitsverletzungsregeln basierend auf einer Antwort, die von einem Systembetreiber im Arbeitsbereich empfangen wird, wenn die SOPs-Verletzungen ausgelöst werden;
automatisches Auflösen, über den einen oder die mehreren Hardwareprozessoren, der SOPs-Verletzungen durch Ausführen einer Ursachenanalyse mit einer Historie von SOPs-Verletzungen, die im Kontextmodell gespeichert sind; und
Vorhersagen, über den einen oder die mehreren Hardwareprozessoren, zukünftiger SOPs-Verletzungen basierend auf der Ursachenanalyse, die an den aktuellen SOPs-Verletzungen ausgeführt wird.

## Revendications

1. Procédé mis en œuvre par processeur pour activer un environnement d'espace de travail intelligent sécurisé, le procédé comprenant :
la création (302), via un ou plusieurs processeurs matériels (202), d'un modèle de contexte associé à l'espace de travail et opérationnel dans un environnement d'espace intelligent, en définissant un domaine contextuel et une pluralité de règles de violation de sécurité pour des procédures d'exploitation standard (SOP) de sécurité d'une pluralité d'actifs augmentés numériquement correspondant à une pluralité d'entités/actifs physiques présents dans l'espace de travail, ladite pluralité d'entités/actifs physiques incluant des machines et du personnel présents dans l'espace de travail, dans lequel la pluralité d'actifs augmentés numériquement comprennent la pluralité d'entités/actifs dans l'environnement d'espace intelligent convertis en une forme numérique via des propriétés ou attributs de métadonnées, lesdits attributs étant associés à un dispositif de capteur correspondant pour une surveillance continue, la pluralité d'actifs augmentés numériquement facilitant la capture de différentes propriétés de métadonnées de la pluralité d'entités/actifs telles qu'une propriété statique, une propriété dynamique basée sur un capteur, une propriété basée sur une consultation et une propriété calculée, permettant ainsi la modélisation de paramètres d'actifs en tant que partie d'état de la pluralité d'entités/actifs physiques et dans lequel le modèle de contexte est entraîné par au moins l'un parmi des modèles d'apprentissage supervisés et non supervisés, en utilisant des données d'entraînement incluant les SOP associées à la pluralité d'actifs présents dans l'espace de travail et la pluralité de règles de violation de sécurité pour les SOP ;
la surveillance (304), en temps réel, d'états de chacun de la pluralité d'actifs augmentés numériquement en obtenant des données basées sur un capteur à partir des dispositifs de capteur déployés dans l'environnement d'espace intelligent mis en œuvre dans l'espace de travail, via les un ou plusieurs processeurs matériels ;
dans lequel les données basées sur un capteur comprennent au moins des données de fonctionnement et des données de mouvement des dispositifs de capteur et dans lequel les données de fonctionnement comprennent des données relatives au fonctionnement des actifs associés aux dispositifs de capteur et les données de mouvement comprennent des données relatives au mouvement des actifs associés aux dispositifs de capteur, dans lequel les dispositifs basés sur un capteur fonctionnent sur des plates-formes qui activent un traitement basé sur l'emplacement, un traitement spatial et spatio-temporel ;
le déclenchement (306), via les un ou plusieurs processeurs matériels (202), de violations de SOP en tant qu'événements, sur la base d'une comparaison d'états de chacun de la pluralité d'actifs augmentés numériquement avec la pluralité de règles de violation de sécurité en utilisant le modèle de contexte, dans lequel la définition de la pluralité de règles de violation de sécurité comprend :
la définition d'un filet de sécurité autour de la pluralité d'actifs augmentés numériquement avec des valeurs limites de flux d'entrée de paramètres dynamiques mises à jour dans le temps sur la base de leur distribution de données d'entrée, le filet de sécurité étant un point d'intersection commun du modèle de distribution de données d'entrée à n'importe quel moment;
la détermination d'un changement dans les points de transition de processus des états de chacun de la pluralité d'actifs augmentés numériquement ;
l'identification des transitions de processus à associer à un ensemble de règles satisfaisant à un automate fini déterministe (DFA) pour des flux de travail entraînés par des événements ; et
la traduction des transitions de processus en la pluralité de règles de violation de sécurité liées au modèle d'informations individuel de chaque actif ou l'application des règles à un contexte global de portée pour tous les actifs faisant partie d'un cas d'utilisation à effectuer ;
la mise à jour dynamique, via les un ou plusieurs processeurs matériels, d'une ou plusieurs de la pluralité de règles de violation de sécurité sur la base d'une réponse reçue d'un opérateur de système dans l'espace de travail, lorsque les violations de SOP sont déclenchées ;
la résolution automatique, via les un ou plusieurs processeurs matériels, des violations de SOP en effectuant une analyse de cause profonde avec un historique de violations de SOP stocké dans le modèle de contexte ; et
la prédiction, via les un ou plusieurs processeurs matériels, de futures violations de SOP sur la base de l'analyse de cause profonde effectuée sur les violations de SOP actuelles.

2. Procédé mis en œuvre par processeur selon la revendication 1, dans lequel la pluralité de règles de violation de sécurité sont associées à des points de transition de processus des états de la pluralité d'actifs augmentés numériquement.

3. Procédé mis en œuvre par processeur selon la revendication 1, comprenant en outre la fourniture
de recommandations des violations de SOP sur la base de la surveillance des états de chacun de la pluralité d'actifs augmentés numériquement.

4. Procédé mis en œuvre par processeur selon la revendication 1, comprenant en outre l'apprentissage du modèle de contexte avec la pluralité de règles de violation de sécurité en utilisant au moins l'un des modèles d'apprentissage supervisé et non supervisé.

5. Système (200) pour activer un environnement d'espace de travail intelligent sécurisé, comprenant :
une mémoire (204) stockant des instructions ;
une ou plusieurs interfaces de communication (206) ; et
un ou plusieurs processeurs matériels (202) couplés à la mémoire (204) via les une ou plusieurs interfaces de communication (206), dans lequel les un ou plusieurs processeurs matériels (204) sont configurés par les instructions pour :
créer (302) un modèle de contexte associé à l'espace de travail et opérationnel dans un environnement d'espace intelligent, en définissant un domaine contextuel et une pluralité de règles de violation de sécurité pour des procédures d'exploitation standard (SOP) de sécurité d'une pluralité d'actifs augmentés numériquement correspondant à une pluralité d'entités/actifs physiques présents dans l'espace de travail, ladite pluralité d'entités/actifs physiques incluant des machines et du personnel présents dans l'espace de travail, dans lequel la pluralité d'actifs augmentés numériquement comprennent la pluralité d'entités/actifs dans l'environnement d'espace intelligent convertis en une forme numérique via des propriétés ou attributs de métadonnées, lesdits attributs étant associés à un dispositif de capteur correspondant pour une surveillance continue, la pluralité d'actifs augmentés numériquement facilitant la capture de différentes propriétés de métadonnées de la pluralité d'entités/actifs telles qu'une propriété statique, une propriété dynamique basée sur un capteur, une propriété basée sur une consultation et une propriété calculée, permettant ainsi la modélisation de paramètres d'actifs en tant que partie d'état de la pluralité d'entités/actifs physiques et dans lequel le modèle de contexte est entraîné par au moins l'un parmi des modèles d'apprentissage supervisés et non supervisés, en utilisant des données d'entraînement incluant les SOP associées à la pluralité d'actifs présents dans l'espace de travail et la pluralité de règles de violation de sécurité pour les SOP;
surveiller (304), en temps réel, des états de chacun de la pluralité d'actifs augmentés numériquement en obtenant des données basées sur un capteur à partir des dispositifs de capteur déployés dans l'environnement d'espace intelligent mis en œuvre dans l'espace de travail ;
dans lequel les données basées sur un capteur comprennent au moins des données de fonctionnement et des données de mouvement des dispositifs de capteur et dans lequel les données de fonctionnement comprennent des données relatives au fonctionnement des actifs associés aux dispositifs de capteur et les données de mouvement comprennent des données relatives au mouvement des actifs associés aux dispositifs de capteur, dans lequel les dispositifs basés sur un capteur fonctionnent sur des plates-formes qui activent un traitement basé sur l'emplacement, un traitement spatial et spatio-temporel ;
déclencher (306) des violations de SOP en tant qu'événements sur la base d'une comparaison d'états de chacun de la pluralité d'actifs augmentés numériquement avec la pluralité de règles de violation de sécurité en utilisant le modèle de contexte, dans lequel la définition de la pluralité de règles de violation de sécurité comprend :
la définition d'un filet de sécurité autour de la pluralité d'actifs augmentés numériquement avec des valeurs limites de flux d'entrée de paramètres dynamiques mises à jour dans le temps sur la base de leur distribution de données d'entrée, le filet de sécurité étant un point d'intersection commun du modèle de distribution de données d'entrée à n'importe quel moment ;
la détermination d'un changement dans les points de transition de processus des états de chacun de la pluralité d'actifs augmentés numériquement ;
l'identification des transitions de processus à associer à un ensemble de règles satisfaisant à un automate fini déterministe (DFA) pour des flux de travail entraînés par des événements ; et traduction des transitions de processus en la pluralité de règles de violation de sécurité liées au modèle d'informations individuel de chaque actif ou l'application des règles à un contexte global de portée pour tous les actifs faisant partie d'un cas d'utilisation à effectuer ;
la mise à jour dynamique d'une ou plusieurs de la pluralité de règles de violation de sécurité sur la base d'une réponse reçue d'un opérateur de système dans l'espace de travail lorsque les violations de SOP sont déclenchées ;
la résolution automatique des violations de SOP en effectuant une analyse de cause profonde avec un historique de violations de SOP stocké dans le modèle de contexte ; et
la prédiction de futures violations de SOP sur la base de l'analyse de cause profonde effectuée sur les violations de SOP actuelles.

6. Système selon la revendication 5, dans lequel la pluralité de règles de violation de sécurité sont associées à des points de transition de processus des états de la pluralité d'actifs augmentés numériquement.

7. Système selon la revendication 5, dans lequel les un ou plusieurs processeurs matériels sont configurés par les instructions pour fournir des recommandations des violations de SOP sur la base de la surveillance des états de chacun de la pluralité d'actifs augmentés numériquement.

8. Système selon la revendication 5, dans lequel les un ou plusieurs processeurs matériels sont configurés par les instructions pour apprendre le modèle de contexte avec la pluralité de règles de violation de sécurité en utilisant au moins l'un des modèles d'apprentissage supervisé et non supervisé.

9. Un ou plusieurs supports de stockage d'informations lisibles par machine non transitoires comprenant une ou plusieurs instructions qui, lorsqu'elles sont exécutées par un ou plusieurs processeurs matériels (202), amènent :
la création (302), via un ou plusieurs processeurs matériels, d'un modèle de contexte associé à l'espace de travail et opérationnel dans un environnement d'espace intelligent, en définissant un domaine contextuel et une pluralité de règles de violation de sécurité pour des procédures d'exploitation standard (SOP) de sécurité d'une pluralité d'actifs augmentés numériquement correspondant à une pluralité d'entités/actifs physiques présents dans l'espace de travail, ladite pluralité d'entités/actifs physiques incluant des machines et du personnel présents dans l'espace de travail, dans lequel la pluralité d'actifs augmentés numériquement comprennent la pluralité d'entités/actifs dans l'environnement d'espace intelligent convertis en une forme numérique via des propriétés ou attributs de métadonnées, lesdits attributs étant associés à un dispositif de capteur correspondant pour une surveillance continue, la pluralité d'actifs augmentés numériquement facilitant la capture de différentes propriétés de métadonnées de la pluralité d'entités/actifs telles qu'une propriété statique, une propriété dynamique basée sur un capteur, une propriété basée sur une consultation et une propriété calculée, permettant ainsi la modélisation de paramètres d'actifs en tant que partie d'état de la pluralité d'entités/actifs physiques et dans lequel le modèle de contexte est appris par au moins l'un parmi des modèles d'apprentissage supervisé et non supervisé, en utilisant des données d'apprentissage incluant les SOP associées à la pluralité d'actifs présents dans l'espace de travail et la pluralité de règles de violation de sécurité pour les SOP ;
la surveillance (304), en temps réel, d'états de chacun de la pluralité d'actifs augmentés numériquement en obtenant des données basées sur un capteur à partir des dispositifs de capteur déployés dans l'environnement d'espace intelligent mis en œuvre dans l'espace de travail, via les un ou plusieurs processeurs matériels ;
dans lequel les données basées sur un capteur comprennent au moins des données de fonctionnement et des données de mouvement des dispositifs de capteur et dans lequel les données de fonctionnement comprennent des données relatives au fonctionnement des actifs associés aux dispositifs de capteur et les données de mouvement comprennent des données relatives au mouvement des actifs associés aux dispositifs de capteur, dans lequel les dispositifs basés sur un capteur fonctionnent sur des plates-formes qui activent un traitement basé sur l'emplacement, un traitement spatial et spatio-temporel ;
le déclenchement (306), via les un ou plusieurs processeurs matériels (202), de violations de SOP en tant qu'événements, sur la base d'une comparaison d'états de chacun de la pluralité d'actifs augmentés numériquement avec la pluralité de règles de violation de sécurité en utilisant le modèle de contexte, dans lequel la définition de la pluralité de règles de violation de sécurité comprend :
la définition d'un filet de sécurité autour de la pluralité d'actifs augmentés numériquement avec des valeurs limites de flux d'entrée de paramètres dynamiques mises à jour dans le temps sur la base de leur distribution de données d'entrée, le filet de sécurité étant un point d'intersection commun du modèle de distribution de données d'entrée à n'importe quel moment;
la détermination d'un changement dans les points de transition de processus des états de chacun de la pluralité d'actifs augmentés numériquement ;
l'identification des transitions de processus à associer à un ensemble de règles satisfaisant à un automate fini déterministe (DFA) pour des flux de travail entraînés par des événements ; et
la traduction des transitions de processus en la pluralité de règles de violation de sécurité liées au modèle d'informations individuel de chaque actif ou l'application des règles à un contexte global de portée pour tous les actifs faisant partie d'un cas d'utilisation à effectuer ;
la mise à jour dynamique, via les un ou plusieurs processeurs matériels, d'une ou plusieurs de la pluralité de règles de violation de sécurité sur la base d'une réponse reçue d'un opérateur de système dans l'espace de travail lorsque les violations de SOP sont déclenchées ;
la résolution automatique, via les un ou plusieurs processeurs matériels, des violations de SOP en effectuant une analyse de cause profonde avec un historique de violations de SOP stocké dans le modèle de contexte ; et
la prédiction, via les un ou plusieurs processeurs matériels, de futures violations de SOP sur la base de l'analyse de cause profonde effectuée sur les violations de SOP actuelles.
